# EUROPEAN PATENT SPECIFICATION

(11) **EP 0 695 681 B1**
(45) Date of publication and mention of the grant of the patent: **06.12.2000**
(21) Application number: 95112157.3
(22) Date of filing: 02.08.1995
(51) Int. Cl.: B62H 1/02

(54) **Stand device for a motorcycle**
Ständer für Motorrad
Béquille pour motocyclette

(30) Priority: 02.08.1994 JP 20016194
(43) Date of publication of application: 07.02.1996
(73) Proprietor: YAMAHA HATSUDOKI KABUSHIKI KAISHA, Iwata-shi Shizuoka-ken, 438 (JP)
(72) Inventor: Wakamatsu, Katsumitsu, Iwata-shi, Shizuoka-ken (JP)
(74) Representative: Grünecker, Kinkeldey, Stockmair & Schwanhäusser Anwaltssozietät

(56) References cited:
- EP-A- 0 340 767
- DE-A- 3 433 986
- FR-A- 1 155 649
- US-A- 4 651 845
- US-A- 4 671 374

## Description

This invention relates to a motorcycle comprising a stand device and a foot rest, said stand device comprising a leg member supported for pivotal movement between a lowered operating position and a retracted stowed position, and a stand actuating device for actuating said leg member, said stand actuating device including a pedal operatively connected with said leg member and moveable between two positions corresponding to the respective positions of said leg member.

As conventional stands for motorcycles, there is generally known a so-called main stand including a leg member. In the conventional main, stand, after the leg member is downwardly rotated to the ground, a rear body of the motorcycle is pulled up in the upper rear direction by rotating the body around a ground-contacting point of the stand, thereby maintaining the body of the motorcycle in an upright condition with a rear wheel being lifted up.

However, in recent years, motorcycles have been widely utilized by many people including women, old, persons or the like. Therefore, the above-described construction is disadvantageous particularly to women because the considerably heavy rear body must be lifted to park the motorcycle. Further, in case that, the motorcycle is employed on business in which the user must be more frequently get on and off, the lifting-up of the heavy rear body on every parking occasion is an extremely bothersome task for the user. On the other hand, there has been also known a side stand which can be operated with easiness. In the case of the motorcycle equipped with the side stand, the vehicle body of the motorcycle must be slant to right or left side upon parking. Therefore, if the motorcycle carries a heavy load thereon, it is difficult to stably park the motorcycle by the side stand.

A motorcycle of the above mentioned type is known from DE-A-3433986, showing the features of the preamble of claim 1.

In order to overcome the above-mentioned problems encountered in the conventional stand, the inventors of the present invention have previously made such a proposal as described in the post-published JP-A-7-47984 relating to a motorcycle equipped with a stand device.

The stand device previously proposed by the inventors includes a pair of right and left leg members mounted beneath a bottom of the vehicle body of the motorcycle. The motorcycle can be supported by the stand not only with the rear wheel being lifted up but also with both the front and rear wheels being in firm contact with the ground. To achieve the latter condition under which the front rear wheels are kept in contact with the ground, one-way clutch mechanism is used in the stand device. The stand device has such a construction that the leg members can be depressed by the user's foot upon use to lower them to the ground.

In addition, the previously proposed stand device of the motorcycle cooperates with a pedal for stowing the stand device. The pedal is disposed on a side of a platform or foot rest in such a manner that, when the leg members are lowered to an operative position, the pedal is projected into a space above the platform or foot rest, thereby enabling the user of the motorcycle, while seating, to lower the stand device to support the motorcycle upon parking and raise it to a stowage position by depressing the pedal projected upwardly from the platform or foot rest.

However, in the previously proposed stand device, although the pedal for stowage of the stand device is conveniently arranged on the platform or foot rest, the pedal is likely to interfere with the users feet because the pedal has a forwardly ascending slant configuration when projected above the platform or foot rest.

In order to solve the above-mentioned problem, there has been a proposal that the pedal is disposed on a front side of the platform or foot rest. However, in the case where the motorcycle is employed on business and therefore almost all the space above the platform or foot rest is required to receive a loading suspended on a hook provided on a front side thereof, this frontside arrangement of the pedal is disadvantageous because the loading has an interference with the pedal.

Accordingly, it is an objective of the present invention to provide an improved motorcycle comprising a stand device and a foot rest which permits to operate the stand easily and conveniently and to assure a large foot accommodating space, without obstructing a rider's feet. Particularly, a pedal for operating the stand device should not interfere with the riders feet or luggage stowed above the foot rest.

According to the present invention, this objective is performed for a motorcycle of the a.m. type in that said pedal is arranged at a rear portion of said foot rest with respect to the motorcycle and extends substantially in a forwardly descending direction with respect to the motorcycle when it is in a position projecting above said foot rest.

Preferred embodiments of the present invention are laid down in dependent claims.

When the user intends to park the motorcycle by the stand, the leg members are lowered to the position where a vehicle body of the motorcycle is kept in an upright state.

When the leg members are lowered, the pedal for stowing the leg member of the stand is projected into the space above the foot rest. However, since the projected pedal has a forwardly descending slant configuration, there is no interference with the user's feet and a loading received therein.

Hereinafter, the present invention is illustrated and explained in greater detail by means of a preferred embodiment of the invention in connection with accompanying drawings, wherein:
Fig. 1 is a schematic side view showing a motorcycle equipped with a stand device according to one preferred embodiment of the present invention.
Fig. 2a is a schematic enlarged view showing a main stand 7b in the raised stowage position and Fig 2b is a schematic enlarged view showing a main stand 7b in the lowered position.
Fig. 3 is a schematic plan view showing details of a mounting site of a stand device 10.
Fig. 4 is an enlarged right side view showing a stand device 10 in the raised stowage position and near-by portion thereof.
Fig. 5 is an enlarged right side view showing a stand device 10 in the lowered open position and near-by portion thereof.
Fig.6 is a cross-sectional view taken along the line A-A of Fig. 5
Fig. 7 is a schematic perspective view of a brake lever.
Figs. 8a and 8b are views showing a series of operations of a regulating device 20 including the ratchet mechanism with respect to the essential components thereof.
Fig. 9 is a view showing one of a series of operations of a regulating device 20 including the ratchet mechanism with respect to the essential components thereof.
Fig. 10 is an enlarged left side view showing the detailed structure of the stand device 10 in the raised inoperative stowage position.
Fig. 11 is an enlarged left side view showing the detailed structure of the stand device 10 in the lowered operative position.
Fig. 12 is a schematic side view of a motorcycle 1 including a vehicle cover.
Fig. 13 is a schematic top plan view of a motorcycle 1 including a vehicle cover.
Fig. 14 is a schematic plan view showing the structural relation between the frame structure 2, the stand device 10 and the vehicle cover 50.
Fig. 15a is a schematic sectional view showing a mounting site of the hook 61 onto the head pipe 2a along the axial direction of the head pipe 2a, Fig. 15b is a sectional view taken along the line B-B of Fig. 15a and Fig. 15a is a schematic perspective view showing the hook 61 singly.

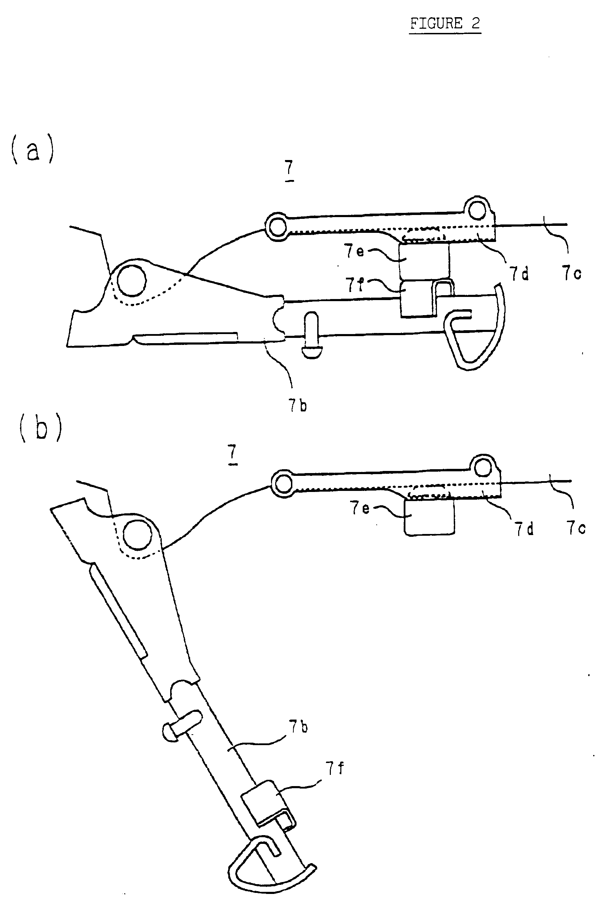

In the drawings, reference numerals 1 and 2 denote a body of the motorcycle and a frame structure thereof, respectively. The frame structure 2 includes a head pipe 2a, an intermediate down tube 2b and a rear frame 2c. The rear frame 2c is formed of a pair of right and left rear members which are connected at front ends thereof to the opposite sides of the intermediate down tube 2b and extend rearwardly therefrom. The intermediate down tube 2b is welded to a cross pipe 2d securely provided between the right and left rear members of the rear frame 2c as shown in Fig. 2. The head pipe 2a rotatably supports a steering stem 4. The steering stem 4 is connected at upper and lower ends thereof with a handle bar 3 and a front fork 5, respectively. A front wheel 6 is rotatably supported between right and left rods of the front fork 5.

At a rear portion of the motorcycle, there is disposed a power unit composed of an engine, a transmission case and a rear wheel 9. The power unit is pivotably connected to the frame structure 2, thereby constituting a so-called unit-swing type engine 7. The engine 7 is swingably mounted through a link member 7a to a bracket 2e secured to the rear frame 2c.

Further, the rear wheel 9 is driven by the engine 7 through a V-belt gear-changing mechanism mounted in the transmission case and a centrifugal clutch.

In addition, a main stand 7b is mounted to a front portion of the engine 7. As shown in Figs. 2a and 2b, the main stand 7b in pivotably supported at an front end thereof on a lower side of the engine 7. Secured to a bottom surface of the transmission case 7c is a L-shaped bracket 7d to which a rubber block 7e as a damper is fixedly mounted. The main stand 7b is also provided at a rear end thereof with a bracket 7f having an U-shape in section. The bracket 7f of the main stand 7b is brought into abutting contact with a lower surface of the rubber block 7e when the main stand is moved into its inoperative position, thereby absorbing an impact or the like generated due to a pivotal movement of the main stand by a force of a spring (not shown) upon accommodation thereof and due to flapping of the main stand during driving the motorcycle. The main stand 7b serves for keeping a vehicle body of the motorcycle at its upright position when the rear wheel 9 is lifted up thereon. This enables a maintenance of the rear wheel 9, racing of the engine 7 and the like.

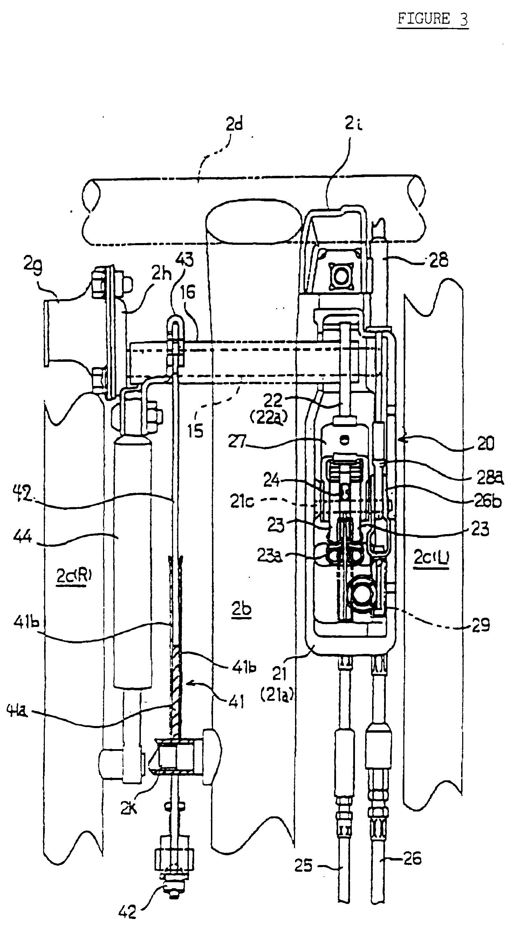

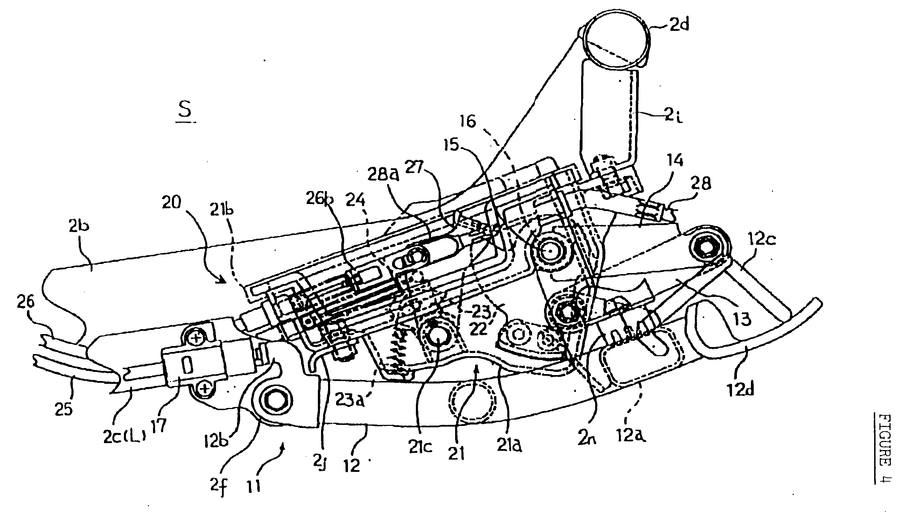

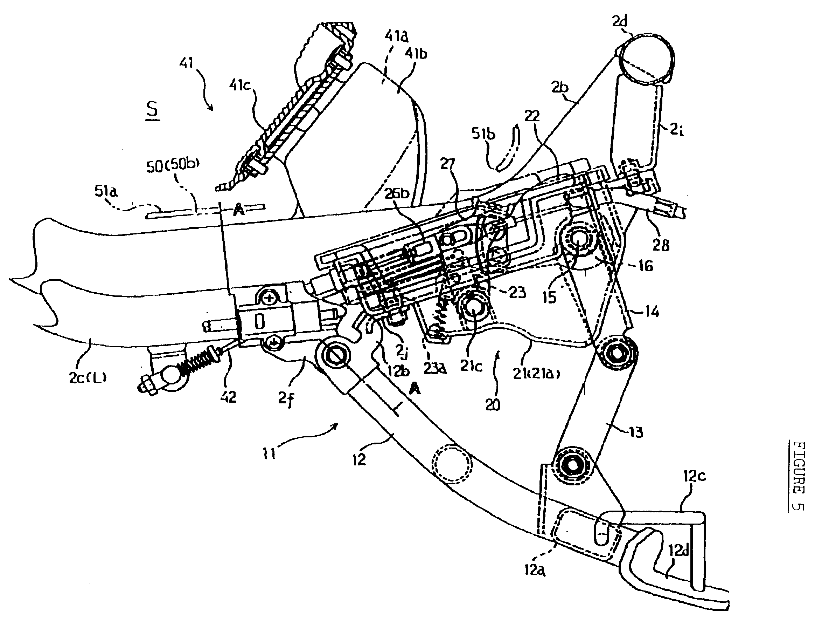

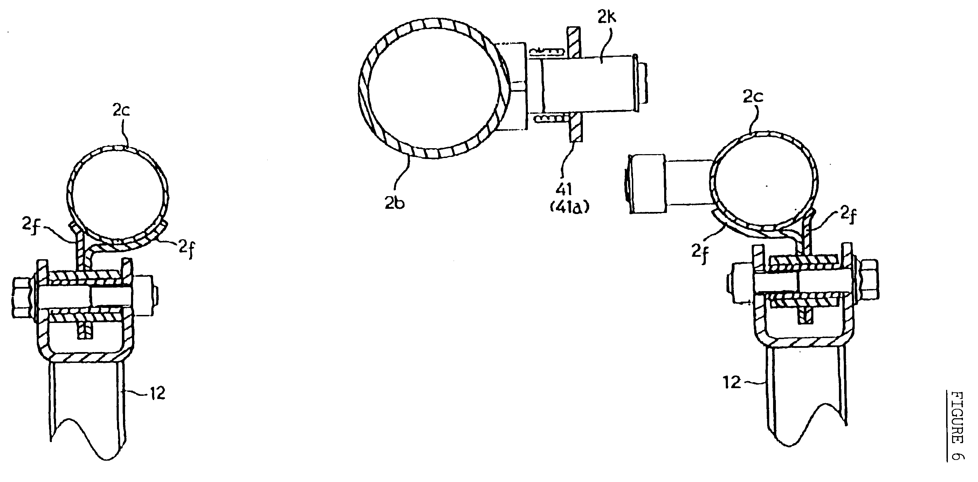

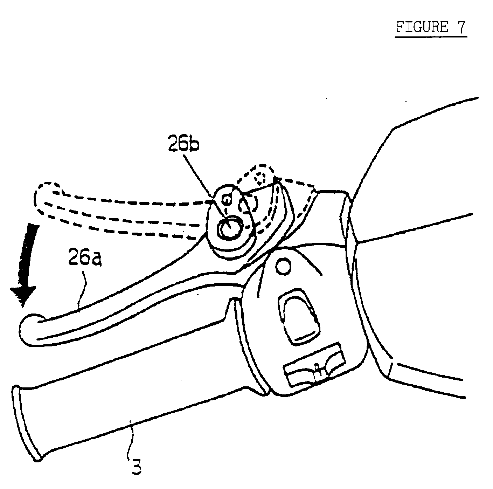

In the followings, the stand device 10 according to the preferred embodiment is explained in detail by referring to Figs. 3 to 11. Specifically, Fig. 3 is a schematic plan view showing a mounting site of the stand device 10. Figs. 4 and 5 are enlarged side views showing details of the structure of the stand device 10, among which Fig. 4 shows the condition where a stand is accommodated in inoperative position while Fig. 5 shows the condition where a stand is moved to the operating position. In addition, Fig. 6 is a cross-sectional view taken along line A-A of Fig. 5 and Fig. 7 is a schematic perspective view of a brake lever for the rear wheel 9.

In the figures, a reference numeral 10 denotes the stand device according to one embodiment of the present invention. The stand device 10 is composed of a pair of stands 11 pivotably mounted to the respective right (R) and left (L) members of the rear frame 2c, a regulating device 20 for controlling the up- and down-movement (pivotal movement) of the stand 11, and an operating mechanism having a primary function for accommodating the stand 11 therein.

The stand 11 comprises a leg member 12 rotatably supported at one end thereof by a bracket 2f securely fixed on the rear frame 2c, a link lever 14 rotatably supported at one end thereof on the frame structure 2, and a link arm 13 pivotably connected at opposite ends thereof to the link lever 14 and the leg member 12, respectively. Thus, the stand 11 constitutes as a whole a four-point hinged link. The leg member 12 of the stand 11 is connected at the other end thereof with an L-shaped ground-contacting plate 12d and a foot-actuated member 12c. The foot-actuated member 12c is formed of a bent pipe and connected at the opposite ends thereof with the ground-contacting plate 12d and the leg member 12, respectively. The ground-contacting plate 12d supports the vehicle body thereon when it moves down and is in firm contact with the ground. The foot-actuated member 12c projects laterally outwardly from the vehicle body of the motorcycle to thereby facilitate a manipulation of the member by a driver's foot.

The link arm 13 and the link lever 14 are connected at their hinged ends with each other. The link arm 13 is connected at the other end thereof to a cross member 12a provided between the right and left leg members 12 of the stands 11 while the link lever 14 is fixedly connected at the other end thereof to a rotatable cylindrical sleeve 16. As shown in Fig. 3, the cylindrical sleeve 16 is rotatably supported on a shaft 15 which is secured to a bracket 2g fixed on the right member 2c(R) of the rear frame 2c through an additional bracket 2h.

The leg member 12 is formed, at the end connecting to the rear frame 2c, with a projection 12b for ON-OFF control of a switch 17 mounted on the bracket 2f. When the stand 11 is folded in the upper inoperative position, the projection 12b is in such a position that the switch 17 is turned on. On the other hand, when the stand 11 pivots downward so as to be in firm contact with the ground, the projection 12b is placed in such a position that the switch 17 is turned off. The signal indicative of the ON or OFF conditions of the switch 17, which are controlled by the projection 12b, is transmitted to a control unit (not shown). When the stand is in the lower position and therefore in firm contact with the ground, the control unit adjusts a revolution of the engine 7 to less than a predetermined value to disconnect the centrifugal clutch, thereby avoiding possible fire accidents. On the other hand, when the stand 11 is in the raised inoperative position, the control of the engine revolution is terminated.

As described hereinafter, the stand device 10 as shown in the figures is capable of supporting the vehicle body of the motorcycle at an upright position while keeping the front and rear wheels in contact with the ground, thereby preventing the motorcycle from being driven with the stand in the lowered operative position.

The regulating device 20 is explained in detail below.

The regulating device 20 is provided between the left member 2c(L) of the rear frame 2c and the intermediate down tube 2b and includes a housing 21 to thereby avoid entering of mud or dust into an inside thereof. The housing 21 is composed of a box-like case 21a made of die-cast aluminum and opened at its top, and a cover 21b made of rubber. The housing 21 is fixedly mounted on the frame structure such that the box-like case 21a is bolted to a bracket 2i fixed on the cross pipe 2d to which the intermediate down tube 2b is connected by welding, and to a cross plate 2j fixedly spanned between the right member 2c(R) of the rear frame 2c and the intermediate down tube 2b.

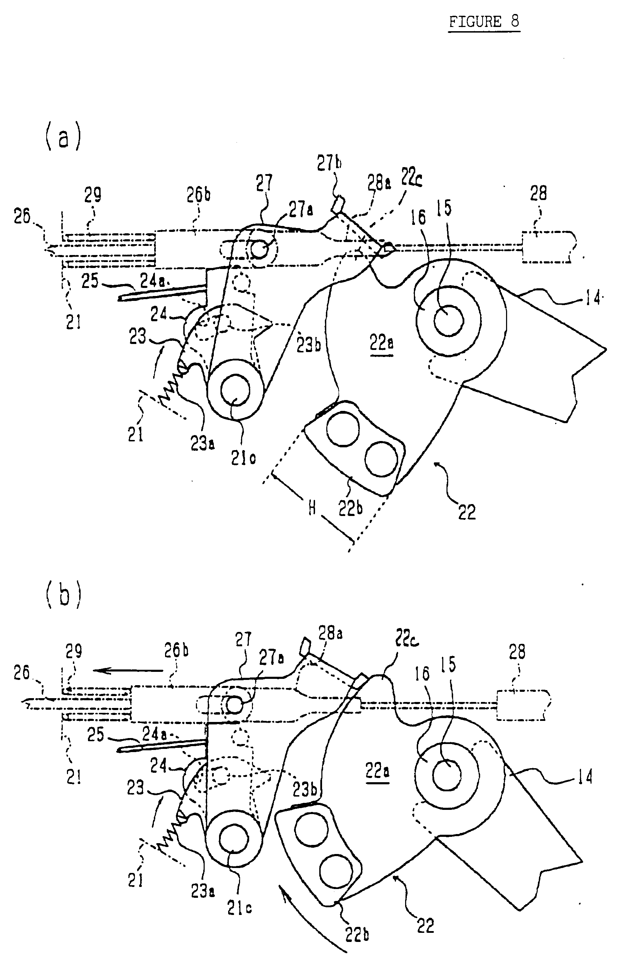

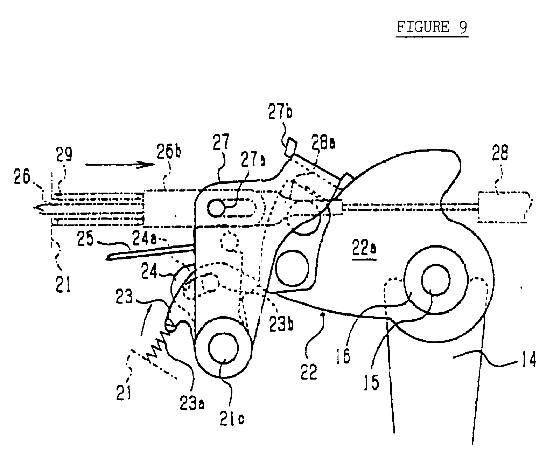

The regulating device 20 is provided with a ratchet mechanism which allows the link lever 14 connected to the leg member 12 through the link arm 13 to rotate in one direction but prevents the link lever 14 from rotating in the reverse direction. Figs. 8a, 8b and 9 show a series of operations of the regulating device 20 including the ratchet mechanism, together with the essential components thereof.

The ratchet mechanism includes a ratchet 22 having a sectorial shape and a pair of pawls 23 for preventing a rotation of the sectorial ratchet 22 in one direction.

The sectorial ratchet 22 is composed of a disc-shaped body 22a and a pair of ratchet blocks 22b securely mounted on a periphery of the disc-shaped body 22a in such a manner that the disc-shaped body 22a is sandwiched therebetween.

The ratchet blocks 22b are each provided at an outer periphery thereof with a plurality of teeth. The teeth of one ratchet block 22b are disposed in a slightly offset relation with those of the other ratchet block 22b when both the ratchet blocks 22b are secured to the disc-shaped body 22a in a mating manner. This enables a fine positioning of the stand 11. The disc-shaped body 22a is secured to the rotatable cylindrical sleeve 16 together with the link lever 14 so that the ratchet 22 is allowed to rotate in association with the pivotal movement of the stand 11.

The pair of pawls 23 are rotatably mounted on a shaft 21c securely mounted between opposite walls of the housing 21. Further, a release plate 24 is disposed between the pair of pawls 23 and rotatably mounted on the shaft 21c in such a manner that the release plate 24 can rotate around the shaft 21c independent of the rotation at the pawls 23. The pair of pawls 23 are always biased toward the sectorial ratchet 22 by the respective springs 23a. By this, when the stand 11 rotates to a predetermined position in the direction toward the lowered operative position, a tip end of each pawl 23 is brought into engagement with the teeth of the individual ratchet block 22b of the sectorial ratchet 22. As a result, the sectorial ratchet 22 is prevented from rotating in the reverse direction, namely in such a direction as causing the stowage of the stand 11. This leads to controlling the stand 11 so as not to rotate upwardly in the inoperative stowage position.

The release plate 24 is provided with an elongated bore 24a having an oval shape. Each pawl 23 is provided with a lug 23b which is projected toward the release plate 24 from an inside face thereof. The lug 23b insertedly engages with the elongated bore 24a. Further, the release plate 24 is connected to one end of a release wire 25 serving for disconnecting the ratchet mechanism. The release wire 25 is connected at the other end thereof with a release lever (not shown) rotatably disposed underneath a brake lever 26a mounted on the handle bar 3 so as to be rotatable around an axis together with or independent of the brake lever 26a. The release lever is engageable with the brake lever 26a by depressing a pin 26b provided on the brake lever 26a so that both the levers makes an unitary rotational motion. The rotation of the release lever causes the release wire 25 to be pulled forwardly (leftwardly as viewed in Figs 8 and 9) so that the ratchet mechanism is disconnected. consequently, when the release wire 25 is pulled forwardly by operating the release lever together with the brake lever 26a, the release plate 24 is forced to rotate around the shaft 21c in association with the operation of both the levers so that a rear peripheral portion of the elongated bore 24a formed on the release plate 24 engages with the lug 23b provided on the pawls 23. As a result, the pawl 23 is forced to rotate around the shaft 21c against a biasing force of each spring 23a, namely the pawls 23 are rotated counterclockwise as view in Figs. 4 and 5 to thereby terminate a forced engagement between the pawls 23 and the sectorial ratchet 22.

In addition, a regulating plate 27 is disposed outside the pair of pawls 23 and supported rotatably around the shaft 21c. The regulating plate 27 is of an L-shape in lateral cross-section and formed at an upper end thereof with an abutting portion 27b which is brought in direct contact with the sectorial ratchet 22. In the embodiment shown in the figures, although the abutting portion 27b is formed into a plate-like shape, the shape of the abutting portion 27b of the regulating plate 27 is not limited thereto but may be formed into any suitable shape capable of engaging with a shoulder 22c of the sectorial ratchet 22 and smoothly moving along an outer periphery of the shoulder 22c. For example, a rubber coated roller may be used instead of the plate-like abutting portion 27b.

The regulating plate 27 is rotatably supported on the shaft 21c and has a function to prevent the sectorial ratchet 22 from rotating whereby the stand 11 is disturbed from moving to the lowered operative position (ground-contacting position) when rear braking is not effected.

Further, the regulating plate 27 is provided at one side face thereof (left side as viewed in the Figs. 8 and 9) with a pin 27a extending outwardly therefrom. The pin 27a intervenes between a first brake wire 26 led to the brake lever 26a and a second brake wire 28 led to a rear brake assembly (not shown) and serves for connecting both the first and second brake wires 26 and 28 with each other. The second brake wire 28 provided on the side of the rear brake assembly, is connected at one end thereof with a coupling element 28a having an elongated bore (no indication by reference numeral) into which the pin 27a is inserted to thereby establish a connection between the second brake wire and the regulating plate 27. On the other hand, the first brake wire 26 provided on the side of the brake lever 26a is also connected at one end thereof with a coupling element 26b having an elongated bore through which the pin 27a of the regulating plate 27 also extends to establish a connection between the first brake wire 26 and the regulating plate 27. Accordingly, when the brake lever 26a is actuated at the handle bar 3, the regulating plate 27 is caused to rotate counterclockwise as viewed in Figs. 8 and 9. The coupling element 26b of the first brake wire 26 is always biased toward the regulating plate 27 by a spring 29 disposed between the coupling element 26b and an outer wall surface of the housing 21.

The operation of the above-constructed regulating device 20 is described below by also referring to Figs 8 and 9.

Fig. 8a is a schematic view showing the relation between the respective components of the regulating device 20 in the case where the stand 11 is in the raised inoperative stowage position. As shown in Fig. 8a, since the regulating plate 27 engages with the shoulder 22c of the sectorial ratchet 22, the sectorial ratchet 22 (namely, the rotatable cylindrical sleeve 16 to which the sectorial ratchet is fixedly mounted) is disturbed from rotating clockwise as viewed in Fig. 8a even if the user tries to depress the foot-actuated member 12c, thereby preventing the stand 11 from move toward the lowered operative position (ground contact position).

In this condition, when the brake lever 26a is gripped to pull the first brake wire 26 against the biasing force of the spring 29, the regulating plate 27 rotates around the shaft 21c in the counterclockwise direction as viewed in Fig. 8a, whereby the engagement between the regulating plate 27 and the sectorial ratchet 22 is terminated and, at the same time, the second brake wire 28 on the side of the rear brake assembly is pulled to brake the rear wheel. At this time, when the user depresses the stand 11 while seating, the sectorial ratchet 22 is caused to rotate clockwise together with the stand 11 (namely, link lever 14) as shown in Fig. 8b. Since the abutting portion 27b of the regulating plate 27 is kept on contacting the shoulder portion 22c of the sectorial ratchet 22, the second brake wire 28 is continuously pulled to its braking position, thereby assuring braked condition of the rear wheel. Successively, when the brake lever 26a is released, the first brake wire 26 is moved toward the sectorial ratchet 22 by the biasing force of the spring 29 and thereby the brake lever 26a returns back to the rest position and is retained there without flappering. In this regard, reference should be made to Fig. 9.

When the user further depresses the foot-actuated member 12c to rotate the link lever 14 in the clockwise direction, the sectorial ratchet 22 is rotated in the same direction in association with the link lever 14 and a leading end portion of each ratchet block 22b contacts the pawl 23 whereby the pawl 23 is forcibly rotated in the counterclockwise direction as viewed in Figs. 8a and 8b against the biasing force of the spring 23a. When the sectorial ratchet 22 is further rotated, a tip end of the pawl 23 engages with the teeth of the ratchet block 22b. This engagement between the pawl 23 and the teeth of the ratchet block 22b prevents a reverse counterclockwise rotation of the sectorial ratchet 22. Therefore, the stand 11 is prevented from moving in the direction toward the raised inoperative stowage position.

Consequently, once the stand 11 is lowered to the operative position where the ground-contacting plate 12d is in firm contact with the ground, the stand is no longer moved back toward the raised inoperative stowage position whereby the vehicle body of the motorcycle can be continuously supported in an upright state while both the front and rear wheels are kept in contact with the ground.

Each ratchet block 22b of the sectorial ratchet 22 has a width H corresponding to at least a rotational range of the stand 11 in which the stand 11 moves between the first position where the vehicle body of the motorcycle is supported in an upright state while both the front and rear wheels are kept in contact with the ground and the second position where the vehicle body of the motorcycle is uprightly supported on the ground while the rear wheel is lifted up and the front wheel is kept in contact with the ground. Accordingly, even when a vehicle height of the motorcycle varies depending upon change in load carried thereon, the stand 11 can still support the vehicle body of the motorcycle in an upright state while the front and rear wheels are kept in contact with the ground.

In Fig. 9, there is shown the condition of the ratchet mechanism in which the stand 11 is further operated by the user who gets off the vehicle, to rotate from the position where the motorcycle is uprightly supported on the ground with the front and rear wheels being kept in contact with the ground to the position where the motorcycle is uprightly supported with the rear wheel 9 being lifted up from the ground 11.

Furthermore, in case that the stand 11 is required to move to the stowage position by depressing a pedal 41 as mentioned hereinafter, the release lever is gripped together with the brake lever 26a in the above-mentioned manner to pull the release wire 25 forwardly so that the pawl 23 is operated through the release plate 24 to rotate in the counterclockwise direction as viewed in the figures while resisting a biasing force of the spring 23a whereby the sectorial ratchet 22 is released from the engagement with the pawl 23 so that the stand 11 can return to the stowage position as shown in Fig. 8a.

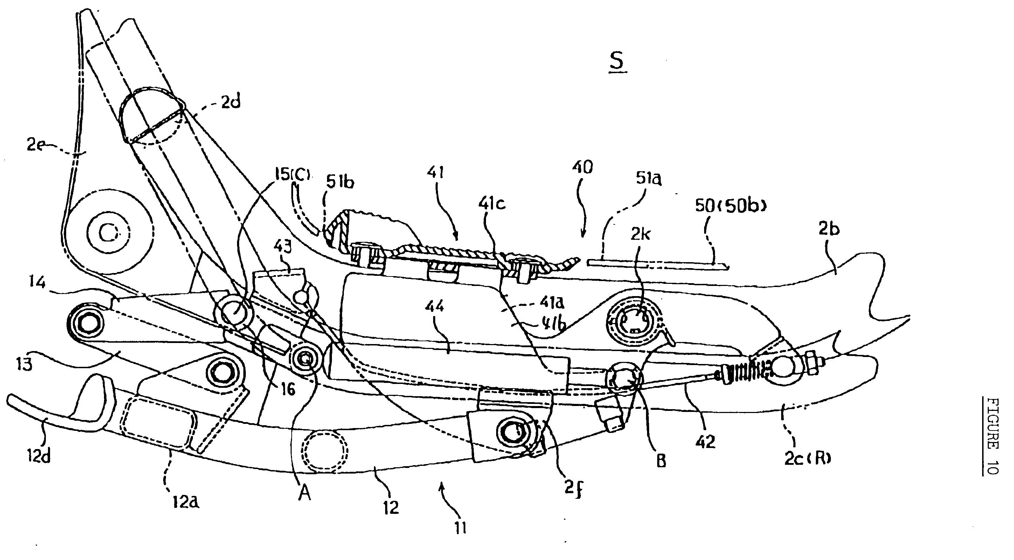

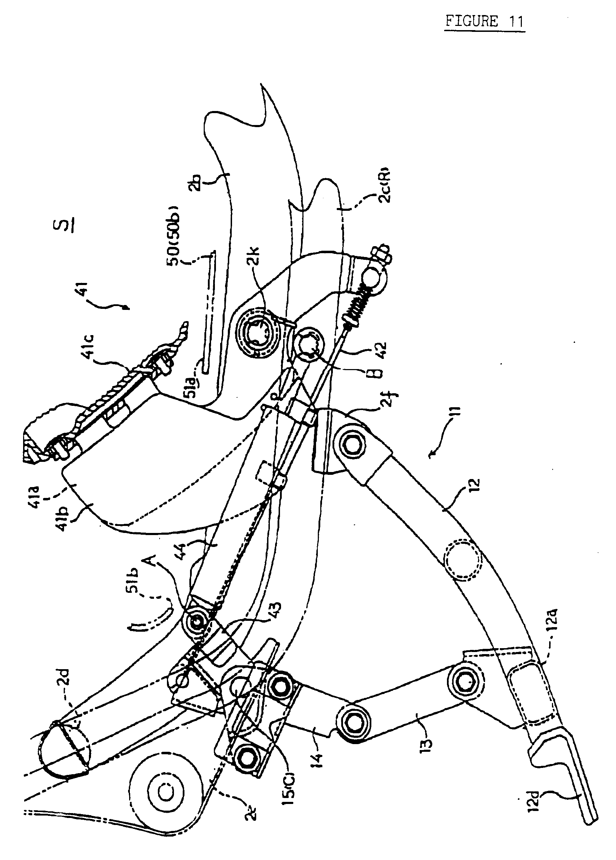

In the following , there is described a stand-actuating device 40. Figs 10 and 11 are enlarged right side views showing the detailed structure of the stand device 10, in which the stand 11 as shown in Fig. 10 is in a raised inoperative stowage position while the stand 11 as shown in Fig. 11 is in a lowered operative position. The stand-actuating device 40 includes a pedal 41, a bracket 43 and an oil damper 44.

As is appreciated by referring to Figs 2 and 6, the pedal 41 is rotatably mounted around a pin 2k projecting outwardly from a right side wall of the intermediate down tube 2b. The pedal 41 includes a plate-like body 41a and a pair of guide plates 41b between which the plate-like body 41a is disposed in a sandwiched relation thereto. The plate-like body 41a is connected at one end thereof with a step plate 41c and at the other end thereof with a release wire 42 for the pedal. The step plate 41c is secured to a bent portion provided at the one end of the plate-like body by a fastening element such as bolts and has an upper surface provided with non-slipping means. The release wire 42 is guided through a space between the pair of guide plates 41b and connected at one end thereof to the plate-like body 41a. The other end of the release wire 42 is fixedly connected to the bracket 43 secured to the cylindrical sleeve 16 on which the link lever 14 of the stand 11 and the sectorial ratchet 22 are fixed.

In addition, an oil damper 44 is disposed between the bracket 43 and the right member 2c(R) of the rear frame 2c. The oil damper 44 acts as a compression spring which exhibits an attenuation effect only during an expanding stroke of the oil damper.

The stand-actuating device 40 having the above-mentioned construction is explained in more detail below. When the stand 11 is in the raised inoperative stowage position, the pedal 41 is so disposed that the step plate 41c of the pedal 41 is accommodated in an opening 51b provided in a platform or foot rest 51, which is a part of a vehicle cover, such that an upper surface of the step plate 41 is aligned with a foot-supporting surface 51a of the platform or foot rest 51. In this situation, a fulcrum A (connecting point of the oil damper 44 to the bracket 43) is located at a lower level than the line passing through the fulcrum B (connecting point of the oil damper to the rear frame 2c) and the rotational center C of the bracket 43. As a result, the oil damper acts on the bracket 43 so as to rotate it in the clockwise direction as viewed in Figs. 10 and 11 around the shaft 15 (fulcrum C).

Further, when the brake lever 26a is operated to release the regulating plate 27 from the sectorial ratchet 22 and the user depresses the foot-actuated member 12c of the stand 11, the depression force is transmitted through the rotatable cylindrical sleeve 16 to the bracket 43 so that the bracket 43 initiates to rotate around the shaft 15 in the counterclockwise direction as viewed in Figs. 10 and 11 in association with the rotational movement of the stand 11. During the counterclockwise rotation of the bracket 43, the oil damper applies thereto a force in the clockwise direction when the fulcrum A is located at a lower level than the line passing through the fulcrum B and the rotational center C of the bracket 43. However, once the fulcrum A is shifted upward beyond the line passing through the fulcrum B and the rotational center C of the bracket 43, the direction of the force applied to the bracket 43 by the oil damper 44 is reversed, namely it changes from clockwise to counterclockwise as viewed in Figs. 10 and 11. This leads to imparting additional rotational force in the counterclockwise direction to the bracket 43 and therefore to the stand 11, thereby promoting the rotational movement of the stand 11 toward the lowered operative position (ground-contact position).

In association with the counterclockwise rotation of the bracket 43, the release wire 42 is pulled toward the side of the bracket 43 so that the pedal 41 is forced to rotate around the pin 2k in the clockwise direction as viewed in Figs. 10 and 11.

Further, when the pedal 41 rotates clockwise as mentioned above, the step plate 41c of the pedal 41 projected upwardly from the foot-supporting surface 51a of the platform or foot rest 51 into a foot-accommodating space S so that the step plate 41c is disposed with a forwardly descending slant configuration as viewed in Fig. 11.

As mentioned above, even after the ground-contacting plate 12d of the stand 11 is lowered to the ground, the oil damper 44 continuously presses the stand against the ground due to its effect as a compression spring. As a result, even if a pebble, gravel or the like intervenes between the stand 11 and the ground and thereafter it is removed therefrom due to any impact or shock applied to the vehicle body, the stand 11 can automatically rotate toward the ground due to the pressing force continuously applied by the oil damper 44 so as to follow the change in condition of the ground, thereby stably keeping the vehicle body of the motorcycle in an upright state while the front and rear wheels 6 and 9 are in contact with the ground.

In order to stow the stand in the raised inoperative position (stowage position), the pawls 23 are first retarded from the sectorial ratchet 22 to terminate the engagement therebetween, and then the user depresses downwardly the step plate 41c projected above the platform or foot rest 51 to rotate the pedal 41 around the pin 2k. The rotation of the pedal 41 causes the release wire 42 to be pulled forwardly (rightwardly as viewed in Figs. 10 and 11), thereby rotating the bracket 43 in the clockwise direction as viewed in Figs. 10 and 11 and finally moving the stand 11 to the stowage position. In this case, the user must apply the depressing force to the step plate 41c to rotate and lower the pedal 41 until the fulcrum A of the oil damper functioning as a compression spring is shifted downwardly beyond the line passing through the fulcrum B and the rotational center C of the bracket 43. However, once the fulcrum A is lowered beyond the line, the oil damper 44 acts on the bracket 43 and therefore the stand 11 such that the stand 11 is caused to automatically rush to the raised inoperative stowage position.

As mentioned above, in addition to the above-mentioned function, the oil damper 44 has additional two functions, namely one is to prevent the stand 11 from further rotating in the counterclockwise direction as viewed in Figs. 11 from the position where the rear wheel is lifted up on the stand 11, and another is to act as a damper which assures a smooth movement of the stand 11 when it is rotated counterclockwise.

Further, as shown in Fig. 4, a rubber stopper 2n is mounted on the rear frame 2c to limit a further upward rotation of the stand 11 by abutment of the leg member 12 thereagainst

In the followings, there is explained a relation between the vehicle cover (fairing) 50 and the stand device 10.

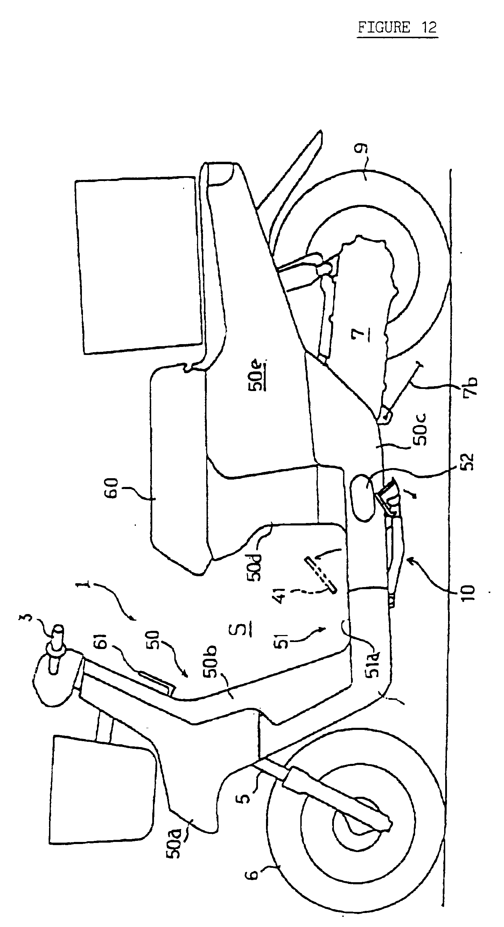

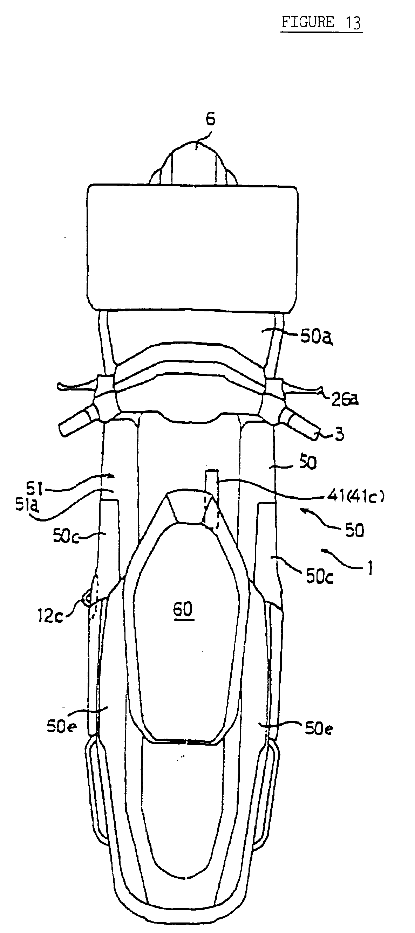

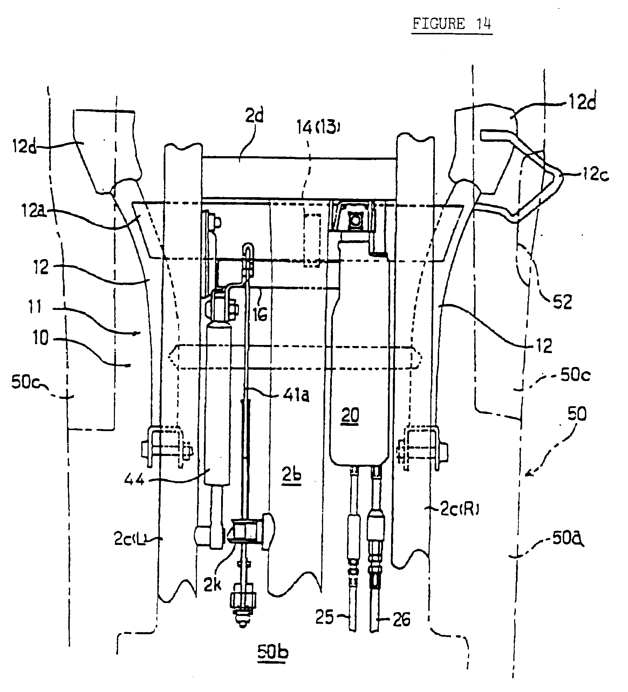

Figs. 12 and 13 are schematic top-plan views showing the vehicle body of the motorcycle including the vehicle cover 50. Fig. 14 is a schematic plan view showing the structural relation between the frame structure 2, the stand device 10 and the vehicle cover (fairing) 50.

The motorcycle 1 is provided with the platform or foot rest 51 located in an approximately central low-floor position of the vehicle body. Further, an unoccupied space above the platform or foot rest 51 serves as a foot-accommodating space S which is defined by a front portion including the handle bar 3, the steering stem 4, the front fork 5 and the like, a rear portion including the seat 60, and the platform or foot rest 51.

In the figures, a reference numeral 50 indicates the vehicle cover (fairing) composed of a front cover 50a surrounding the head pipe 2a, a rear cover 50b, a central cover 50d covering the platform or foot rest 51 and a lower portion of the seat 60, a pair of right and left side covers 50c and a lower cover 50e secured to a lower side of the side covers 50e. The lower cover 50e has opposite upper flat portions constituting a portion of the platform or foot rest 51 as shown in Fig. 13.

The lower cover 50c of the vehicle cover 50 is formed with an inwardly recessed portion 52 in which an upper inside portion of the foot-actuated member 12c is located when the stand 11 is in the raised inoperative stowage position. The location of the foot-actuated member 12c in the inwardly recessed portion 52 of the lower cover 50c makes it difficult for the seated user to have unconscious access to the foot-actuated member 12c by his foot.

Accordingly, since the upper portion of the foot-actuated member 12c of the stand 11 is covered by a portion of the lower cover 50c, the contact of the user's foot and the foot-actuating member 12c does not occur unless the user actively puts his foot on the foot-actuated member 12c. To the contrary, if the user intends to operate the foot-actuated member 12c, a simple access to the foot-actuated member 12c can be obtained only by guiding his foot along the outer periphery of the lower cover 50c to find a projected portion of the foot-actuated member 12c, whereby the user can operate the stand 11.

As mentioned above, the step plate 41c of the pedal 41 in the stand device 10 is disposed in a rear portion of the platform or foot rest 51 as shown in Fig. 13. When the stand 11 of the stand device 10 is lowered, the step plate 41c is located in a relatively rear portion of the foot-supporting surface 51a of the platform or foot rest 51 and projects in the foot-accommodating space S with the forwardly descending slant configuration as indicated by a broken line in Fig. 12. Therefore, no disturbance is created to receive the user's feet in the foot-accommodating space S so that the user on the seat 60 can depress the step plate 41c without any difficulty.

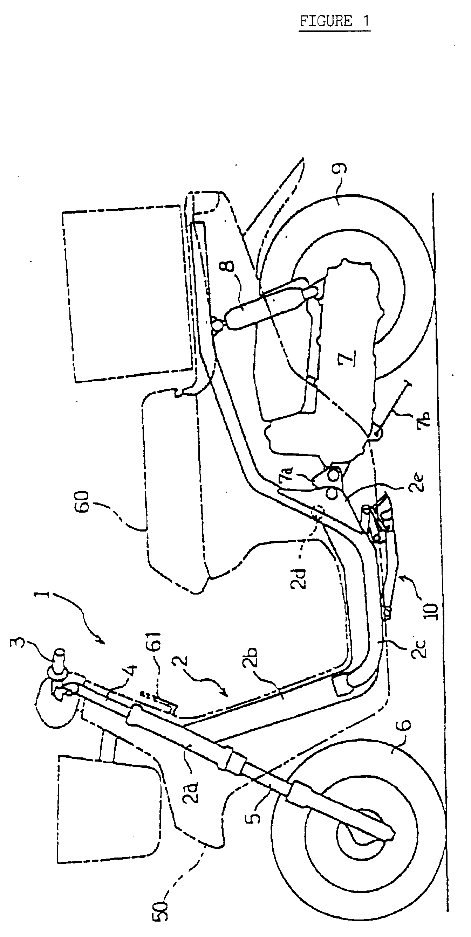

As shown in Figs. 1 and 11, the motorcycle 1 is provided with a hook 61 fixedly mounted on the head pipe 2a. The hook 61 serves for suspending a loading received in the foot-accommodating space S and surely retaining it.

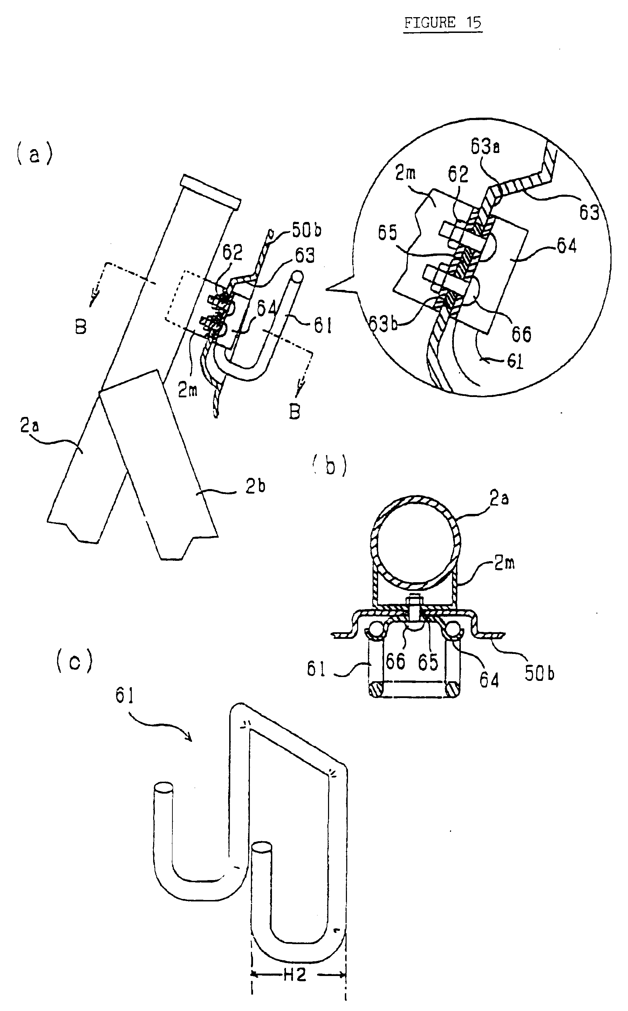

In the followings, a manner of mounting the hook 61 to the head pipe 2a is described by referring to Figs. 15a, 15b and 15c, in which Fig. 15a is a schematic view showing a mounting site of the hook 61 onto the head pipe 2a in longitudinal section along the axial direction of the head pipe 2a, Fig. 15b is a sectional view taken along the line B-B of Fig. 15a, and Fig. 15c is a schematic perspective view showing the hook 61 singly.

As shown in the figures, a bracket 2m having an U-shape in section is welded on the head pipe 2a. The bracket 2m is provided on an inside surface thereof with two nuts which are welded thereto and aligned in the vertical direction. A front back cover 50 b of the vehicle cover 50 is formed with an inwardly recessed portion 63 at the position opposite to the bracket 2m to which the hook 61 is mounted. Further, an opening 63b is formed through a bottom wall 63a of the inwardly recessed portion 63.

The hook 61 is formed of a bent pipe a shown in Fig. 15c. Both ends 61a of the hook 61 are connected to a bracket 64 by welding. Thus constructed hook 61 is mounted to the opening 63b in the inwardly recessed portion 63 of the front back cover 50b such that the bracket 64 is secured by bolts to the U-shaped bracket 2m through a metal spacer 65.

In the above-mentioned construction, since the front back cover 50b of the vehicle cover 50 is provided with the inwardly recessed portion 63 and the hook 61 is mounted therein, the hook 61 is prevented from excessively projecting into the foot-accommodating space S even when the hook 61 has a large width 2H at its bent portion. This assures a good appearance when the motorcycle 1 is viewed from the lateral side. Furthermore, since the hook 61 is mounted in the inwardly recessed portion 63 of the front back cover 50b, an interference between the mounting portion of the hook 61 and a suspended portion of the loading received in the foot-accommodating space S is effectively prevented.

In the above-mentioned preferred embodiment of the present invention, the exemplary explanation is made with respect to the motorcycle equipped with the stand device which is capable of supporting the motorcycle at an upright state while the front and rear wheels are in firm contact with the ground. However, a type of stand device to which the present invention is applied is not limited thereto but the present invention is also applicable to any optional type of stand including, for example, a side stand having a known structure.

Further, although the motorcycle of the type having the vehicle cover 50 disposed surrounding the platform or foot rest 51 is described in the above-mentioned embodiment of the present invention, the present invention is also applicable to any optional type of motorcycles, for example, those having a vehicle cover formed integrally with a foot rest.

Further, in the above preferred embodiment of the present invention, the pedal 41 is so constructed that the upper surface of the step plate 41c is aligned with the foot-supporting surface 51a of the platform or foot rest 51 when the stand 11 is in the raised stowage position. However, the shape or construction of the pedal 41 usable in the present invention is not restricted thereto. In the present invention, there may be used the pedal having any optional construction as far as a pedal 41 is disposed on the rear portion of the foot-supporting surface 51a. For instance, the step plate 41c may be still located at a higher level than the foot-supporting surface 51a when the stand 11 is in the raised stowage position.

Since the stand device according to the present invention utilizes a compression force of the oil damper 44 to assist the rotational operation of the stand device, the stand 11 can be automatically lowered or raised to the operative or inoperative position only by applying a depressing force for a relatively short period of time to the foot-actuated member 12c or the pedal 41 until it reaches a predetermined position, thereby improving a operability of the stand device.

In addition, since the oil damper 44 used in the present invention is provided in an inside thereof with an air damper whose damping force acts only in the expanded direction, smooth lowering and raising operations of the stand 11 can be achieved without creating a large impact noise or the like.

Further, in the motorcycle equipped with the stand device according to the present invention, since the inwardly recessed portion 52 is formed on the lower cover 50c so as to accommodate a portion of the foot-actuated member 12c and the vehicle body of the motorcycle is so constructed that it is uprightly supported with the front and rear wheels are kept in firm contact with the ground, the user can operate the stand 11 while seating to park the motorcycle.

Since the motorcycle equipped with the stand device as described above has such a construction that the vehicle body is uprightly supported by the stand while the front and rear wheels are kept in firm contact with the ground, the stand device has a particular convenience when it is applied to the motorcycle for business use in which the stand must be operated many times. Further, since a pedal for stowing the stand is provided on the platform or foot rest, the user can easily perform the stand stowage operation while seating, thereby achieving an improved operability of the stand device.

## Claims

1. Motorcycle (1) comprising a stand device (10) and foot rest (51), said stand device (10) comprising:
a leg member (12) supported for pivotal movement between a lowered operating position and a retracted stowed position, and
a stand actuating device (40) for actuating said leg member (12), said stand actuating device (40) including a pedal (41) operatively connected with said leg member (12) and moveable between two positions corresponding to the respective positions of said leg member (12),
**characterized in that**
said pedal (41) is arranged at a rear portion of said foot rest (51) with respect to the motorcycle and extends substantially in a forwardly descending direction with respect to the motorcycle when it is in a position projecting above said foot rest (51).

2. Motorcycle according to claim 1, **characterized in that** in its non-projecting position, said pedal (41) is retracted into a recess (51b) formed in said foot rest (51), an upper surface of the pedal (41) being aligned with a foot supporting surface (51a) of the foot rest (51).

3. Motorcycle according to claim 1 or 2, **characterized in that** said pedal (41) is a bellcrank lever pivotably supported about an axis (2K) disposed below said foot rest (51), one end of said bellcrank lever being connected with a rotatable member (43) for actuating the leg member (12) such that swivelling movement of said pedal towards its non-projecting position causes retraction of said leg member toward the stowed position thereof.

4. Motorcycle according to claim 3, **characterized in that** said pivot axis (2K) is disposed forwardly of the portion of the pedal (41) projecting above the foot rest (51) in the respective position of the pedal.

5. Motorcycle according to at least one of claims 1 to 4, **characterized by** a regulating device (20) for regulating the operation of said leg member (12).

6. Motorcycle according to claim 5, **characterized in that** said regulating device (20) includes a ratchet mechanism (22, 23) associated with the pivotable support of said leg member (12), for preventing swinging of said leg member in the reverse direction towards the retracted stowed position thereof.

7. Motorcycle according to claim 6, **characterized in that** a release mechanism (24) is provided for releasing said ratchet mechanism, said release mechanism comprising a release lever associated with a brake lever to actuate a brake of the motorcycle simultaneously with said release mechanism.

8. Motorcycle according to at least one of claims 1 to 5, **characterized in that** said regulating device (20) further includes a moveable regulating member (27) for locking the leg member (12) in its retracted position, said regulating member (27) being operated to unlock said leg member when a brake is actuated.

9. Motorcycle according to at least one of claims 1 to 9, **characterized in that** said stand actuating device comprises biasing means (44) for biasing said leg member (12) into one of the operating or retracted positions thereof.

10. Motorcycle according to at least one of claims 1 to 9, **characterized in that** a link arm (13) is pivotably supported on said leg member (12) at one end of said link arm and pivotably connected with a link lever (14) at the other end of said link arm, said link lever (14) in turn being pivotably supported on a motorcycle body and fixedly connected with the rotatable member (43) connected to the pedal (41) for actuating the leg member (12).

11. Motorcycle according to at least one of claims 1 to 10, **characterized in that** said leg member (12) comprises left and right portions for supporting the motorcycle in an upright position with front and rear wheels being in contact with the ground.

## Patentansprüche

1. Motorrad (1) mit einer Ständereinrichtung (10) und einer Fußraste (51), wobei diese Ständereinrichtung (10) umfaßt:
ein Beinelement (12), das abgestützt ist für eine Schwenkbewegung zwischen einer abgesenkten Betriebsposition und einer zurückgezogenen verstauten Position, und
einer Ständerbetätigungseinrichtung (40) zum Betätigen dieses Beinelementes (12),
wobei diese Ständerbetätigungseinrichtung (40) ein Pedal (41) enthält, das operativ mit diesem Beinelement (12) verbunden und zwischen zwei Positionen bewegbar ist, die mit den entsprechenden Positionen von dem Beinelement (12) korrespondieren,
**dadurch gekennzeichnet,** dass
dieses Pedal (41) an einem rückwärtigen Abschnitt von der Fußraste (51) bezüglich des Motorrads angeordnet ist und sich im Wesentlichen in einer nach vorne und unten geneigten Richtung bezüglich des Motorrads erstreckt, wenn es sich in einer Position befindet, in der es sich oberhalb von dieser Fußraste (51) erstreckt.

2. Motorrad nach Anspruch 1, **dadurch gekennzeichnet,** dass in seiner nichterstreckenden Position dieses Pedal (41) in einer Aussparung (51b) zurückgezogen ist, die in dieser Fußraste (51) ausgeformt ist, und dass eine obere Oberfläche von dem Pedal (41) mit einer Fußabstützoberfläche (51a) von der Fußraste (41) fluchtend ausgerichtet ist.

3. Motorrad nach Anspruch 1 oder 2, **dadurch gekennzeichnet,** dass das Pedal (41) ein Kniehebel ist, der um eine Achse (2K) verschwenkbar ist, welche unterhalb von dieser Fußraste (51) angeordnet ist, wobei ein Ende von diesem Kniehebel mit einem drehbaren Element (43) verbunden ist zum Betätigen des Beinelementes (12) derart, dass eine Schwenkbewegung von diesem Pedal in Richtung auf seine nicht-herausragende Position ein Zurückziehen von diesem Beinelement in Richtung auf die verstaute Position davon bewirkt.

4. Motorrad nach Anspruch 3, **dadurch gekennzeichnet,** dass diese Schwenkachse (2K) vor dem Abschnitt des Pedals (41) angeordnet ist, der sich oberhalb der Fußraste (51) in der entsprechenden Position von dem Pedal erstreckt.

5. Motorrad nach zumindest einem der Ansprüche 1 bis 4, **gekennzeichnet durch** eine Reguliereinrichtung (20) zum Regulieren des Betriebes von diesem Beinelement (12).

6. Motorrad nach Anspruch 5, **dadurch gekennzeichnet,** dass diese Reguliereinrichtung (20) einen Rastmechanismus (22,23) enthält, der der verschwenkbaren Stütze von diesem Beinelement (12) zugeordnet ist, um ein Schwingen von diesem Beinelement in eine rückwärtige Richtung auf die zurückgezogene verstaute Position davon zu verhindern.

7. Motorrad nach Anspruch 6, **dadurch gekennzeichnet,** dass ein Freigabemechanismus (24) vorgesehen ist zum Freigeben von diesem Rastmechanismus, wobei dieser Rastmechanismus einen Freigabehebel enthält, der einem Bremshebel zugeordnet ist, um eine Bremse von dem Motorrad simultan mit diesem Freigabemechanismus zu betätigen.

8. Motorrad nach zumindest einem der Ansprüche 1 bis 5, **dadurch gekennzeichnet,** dass diese Reguliereinrichtung (20) des Weiteren ein bewegbares Regulierelement (27) enthält zum Verriegeln des Beinelementes (12) in seiner zurückgezogenen Position, wobei dieses Regulierelement (27) betätigt wird, um dieses Beinelement zu entriegeln, wenn eine Bremse betätigt wird.

9. Motorrad nach zumindest einem der Ansprüche 1 bis 9, **dadurch gekennzeichnet,** dass die Standerbetätigungseinrichtung eine Vorspanneinrichtung (44) enthalt zum Vorspannen von diesem Beinelement (12) in einer der Betriebsposition oder zurückgezogenen Positionen davon.

10. Motorrad nach zumindest einem der Ansprüche 1 bis 9, **dadurch gekennzeichnet,** dass ein Verbindungsarm (13) verschwenkbar an diesem Beinelement (12) an einem Ende von diesem Verbindungsarm angeschlossen ist, sowie verschwenkbar an einem Verbindungshebel (14) an einem anderen Ende von diesem Verbindungsarm angeschlossen ist, wobei diesel Verbindungshebel (14) wiederum verschwenkbar an einem Motorradkörper abgestützt und fest mit dem drehbaren Element (43) verbunden ist, das an dem Pedal (41) zur Betätigung des Beinelementes (12) angeschlossen ist.

11. Motorrad nach zumindest einem der Ansprüche 1 bis 10, **dadurch gekennzeichnet,** dass dieses Beinelement (12) linke und rechte Abschnitte aufweist zum Abstützen des Motorrads in einer aufrechten Position, wobei die Vorder- und Hinterräder sich in Kontakt mit dem Grund befinden.

## Revendications

1. Motocyclette (1) comprenant une béquille (10) et un repose-pied (51), ladite béquille (10) comprenant :
un élément formant jambe (12) supporté en rotation entre une position opérationnelle abaissée et une position rangée escamotée, et
un dispositif de mise en oeuvre de béquille (40) pour mettre en oeuvre ledit élément formant jambe (12),
ledit dispositif de mise en oeuvre de béquille (40) comprenant une pédale (41) reliée de manière opérationnelle audit élément formant jambe (12) et mobile entre deux positions correspondant aux positions respectives dudit élément formant jambe (12),
**caractérisée en ce que**
ladite pédale (41) est agencée au niveau d'une partie arrière dudit repose-pied (51) par rapport à la motocyclette et s'étend sensiblement dans un sens descendant vers l'avant par rapport à la motocyclette quand elle est dans une position dépassant au-dessus dudit repose-pied (51).

2. Motocyclette selon la revendication 1, **caractérisée en ce que** dans sa position ne dépassant pas, ladite pédale (41) est escamotée dans une partie en retrait (51b) formée dans ledit repose-pied (51), une surface supérieure de la pédale (41) étant alignée avec une surface de support de pied (51a) du reposepied (51).

3. Motocyclette selon la revendication 1 ou 2, **caractérisée en ce que** ladite pédale (41) est un levier coudé supporté en rotation autour d'un axe (2K) disposé au-dessous dudit repose-pied (51), une extrémité particulière dudit levier coudé étant reliée à un élément rotatif (43) pour mettre en oeuvre l'élément formant jambe (12) de sorte qu'un mouvement pivotant de ladite pédale vers sa position ne dépassant pas provoque l'escamotage dudit élément formant jambe vers la position rangée de ce dernier.

4. Motocyclette selon la revendication 3, **caractérisée en ce que** ledit axe de pivot (2K) est disposé en avant de la partie de la pédale (41) dépassant au-dessus du repose-pied (51) dans la position respective de la pédale.

5. Motocyclette selon au moins une des revendications 1 à 4, **caractérisée par** un dispositif de régulation (20) pour réguler le fonctionnement dudit élément formant jambe (12).

6. Motocyclette selon la revendication 5, **caractérisée en ce que** ledit dispositif de régulation (20) comprend un mécanisme à rochet (22, 23) associé au support pivotant dudit élément formant jambe (12), pour empêcher l'oscillation dudit élément formant jambe en sens inverse vers la position rangée escamotée de ce dernier.

7. Motocyclette selon la revendication 6, **caractérisée en ce qu**'un mécanisme de libération (24) est prévu pour libérer ledit mécanisme à rochet, ledit mécanisme de libération comprenant un levier de libération associé à un levier de frein pour mettre en oeuvre un frein de la motocyclette en même temps que ledit mécanisme de libération.

8. Motocyclette selon au moins une des revendications 1 à 5, **caractérisée en ce que** ledit dispositif de régulation (20) comprend de plus un élément de régulation mobile (27) pour verrouiller l'élément formant jambe (12) dans sa position escamotée, ledit élément de régulation (27) étant mis en fonctionnement pour déverrouiller ledit élément formant jambe quand un frein est mis en oeuvre.

9. Motocyclette selon au moins une des revendications 1 à 9, **caractérisée en ce que** ledit dispositif de mise en oeuvre de béquille comprend des moyens de poussée (44) pour pousser ledit élément formant jambe (12) dans l'une des positions opérationnelle ou escamotée.

10. Motocyclette selon au moins une des revendications 1 à 9, **caractérisée en ce qu**'un bras de liaison (13) est supporté en rotation sur ledit élément formant jambe (12) au niveau d'une extrémité particulière dudit bras de liaison et est relié en rotation à un levier de liaison (14) au niveau de l'autre extrémité dudit bras de liaison, ledit levier de liaison (14) étant à son tour supporté en rotation sur un châssis de motocyclette et étant relié de manière fixe à l'élément rotatif (43) relié à la pédale (41) pour mettre en oeuvre l'élément formant jambe (12).

11. Motocyclette selon au moins une des revendications 1 à 10, **caractérisée en ce que** ledit élément formant jambe (12) comprend des parties de droite et de gauche pour supporter la motocyclette dans une position verticale, les roues avant et arrière étant en contact avec le sol.
